Europäisches Patentamt

European Patent Office

Office européen des brevets

(19)

(11) Numéro de publication : **0 511 109 A1**

(12) # DEMANDE DE BREVET EUROPEEN

(21) Numéro de dépôt : **92401169.5**

(22) Date de dépôt : **23.04.92**

(51) Int. Cl.⁵ : **G01N 23/222**

(30) Priorité : **25.04.91 FR 9105128**

(43) Date de publication de la demande :
**28.10.92 Bulletin 92/44**

(84) Etats contractants désignés :
**BE DE GB**

(71) Demandeur : **COMMISSARIAT A L'ENERGIE ATOMIQUE**
**31-33, rue de la Fédération**
**F-75015 Paris (FR)**

(72) Inventeur : **Ruffet, Pierre**
**9, Allée du Parc**
**F-91630 Marolles en Hurepoix (FR)**

(74) Mandataire : **Mongrédien, André et al**
**c/o BREVATOME 25, rue de Ponthieu**
**F-75008 Paris (FR)**

(54) **Perfectionnement aux dispositifs de détection de matières fissiles.**

(57)   Le dispositif comprend, opposés au générateur de neutrons pulsé (10), deux compteurs proportionnels (C, C') dont l'un avec écran. Par référence à un étalonnage préalable, on peut déterminer si la matrice du fût contient des matériaux hydrogénés.

  Application au contrôle des dechets nucléaires.

FIG. 2

EP 0 511 109 A1

La présente invention a pour objet un perfectionnement aux dispositifs de détection de matières fissiles. Elle trouve une application dans le contrôle des déchets nucléaires.

Pour contrôler la présence de matières fissiles dans des déchets nucléaires, on sait qu'il est possible d'utiliser des neutrons thermiques produits à partir d'une source pulsée associée à des moyens de thermalisation. Ces neutrons thermiques sont aptes à produire, dans les déchets à contrôler, des neutrons de fission, si ces déchets contiennent des matières fissiles. La détection de ces matières revient alors à détecter des neutrons de fission.

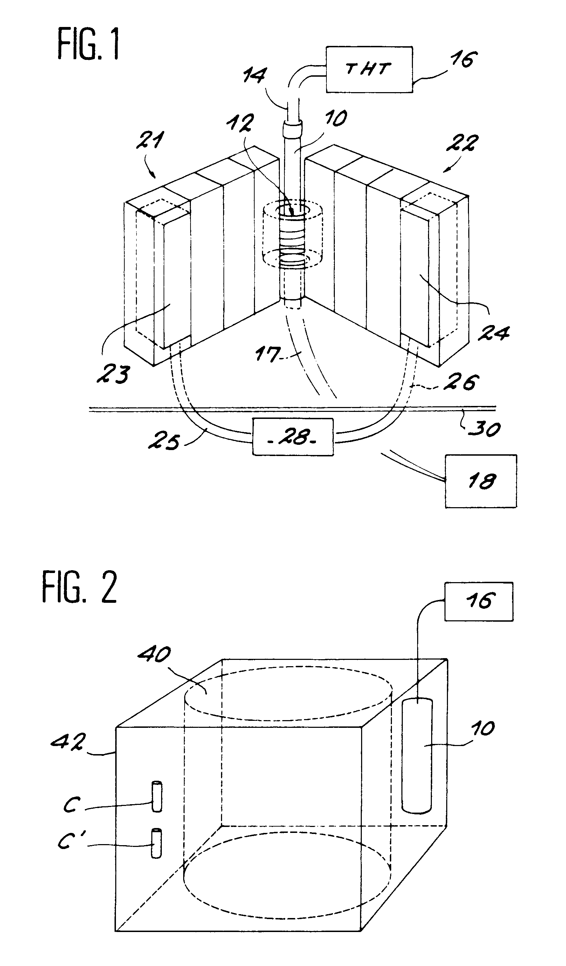

La demande de brevet FR-A-2 588 085 décrit ainsi un dispositif mettant en oeuvre cette technique et qui est représenté sur la figure 1 annexée. Ce dispositif comprend un générateur de neutrons pulsé 10 entouré d'un bloc convertisseur 12. Ce générateur est constitué d'une enveloppe cylindrique allongée à l'intérieur de laquelle se trouve une cible de titane tritié. Ce générateur est relié, d'un côté, par un câble 14, à une alimentation à très haute tension 16, et de l'autre, par un câble 17 à un coffret électronique 18.

Le bloc convertisseur 12 est un cylindre de plomb d'environ 15cm de hauteur et de 5cm d'épaisseur. Il est placé autour du générateur cylindrique au niveau de la cible produisant les neutrons.

L'ensemble générateur-convertisseur est disposé sur l'arête d'un dièdre formé par deux panneaux 21 et 22. Ces panneaux sont constitués chacun, dans la variante illustrée, par quatre module de polyéthylène. Trois modules sont pleins. Le quatrième est évidé et permet de loger un bloc de détection, respectivement 23 et 24. Ces blocs sont constitués chacun par trois compteurs à hélium 3 (du type 65NH45) entourés de cadmium et de $B_4C$. Ces six compteurs sont reliés par des câbles 25 et 26 à on circuit électronique 28.

Les panneaux 21 et 22 reposent sur un support 30 et ils forment un angle réglable.

L'objet à contrôler est placé dans un alvéole disposé entre les deux panneaux, à proximité des blocs de détection. Cet objet est en général un fût constitué d'une matrice contenant éventuellement une matière fissile. Or, les résultats des mesures effectuées par un tel dispositif sont entachés d'erreurs liées à la composition de la matrice, surtout si celle-ci est en un matériau hydrogéné (par exemple en matière vinylique). Naturellement, si la matière constituant la matrice est connue, on peut en tenir compte et corriger les résultats de mesure. Mais, dans bien des cas, la composition de la matrice est inconnue. On est alors amené à effectuer des mesures de temps de vie des neutrons dans l'alvéole en fonction du temps. Cette technique est cependant compliquée et longue.

La présente invention a justement pour but de remédier à cet inconvénient en proposant un dispositif perfectionné permettant très simplement de déterminer si la matrice contient ou non des matières hydrogénées.

A cette fin, le dispositif comprend, en plus des moyens déjà indiqués, à l'opposé du générateur de neutrons pulsé, deux compteurs proportionnels disposés l'un au-dessus de l'autre, symétriquement par rapport au plan médian du fût à contrôler, l'un des deux compteurs étant recouvert d'un écran neutronique, ces deux compteurs ayant été préalablement étalonnés avec diverses matrices homogènes de poids connu et réalisées en divers matériaux dont des matériaux hydrogénés ; le comptage à l'aide du compteur avec écran permet de savoir si la matrice est en matériau léger ou en matériau lourd et le comptage à l'aide du compteur sans écran permet de distinguer, dans le cas des matériaux légers, la présence de matière hydrogénée.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :
- la figure 1, déjà décrite, montre un dispositif de l'art antérieur,
- la figure 2 montre un dispositif conforme à l'invention,
- la figure 3 montre des courbes d'étalonnage obtenues avec celui des deux compteurs qui comprend un écran,
- la figure 4 montre des courbes d'étalonnage obtenues avec celui des deux compteurs qui ne comprend pas d'écran.

Sur la figure 2, on voit un dispositif de détection de matières fissiles du genre de celui de la figure 1, où seulement le générateur de neutrons pulsé 10 a été représenté avec son alimentation à haute tension 16. L'alvéole où peut être placé le fût à contrôler 40 est schématiquement représenté par le parallélépipède 42.

Deux compteurs proportionnels C et C' sont disposés dans l'alvéole de mesure, sur un même axe vertical et de part et d'autre du plan médian du fût. Il peut s'agir de compteurs proportionnels à hélium 3, de type 1,3NH4 XERAM. Le compteur C est dépourvu d'écran. Le compteur C' est recouvert d'un écran neutronique, par exemple en cadmium.

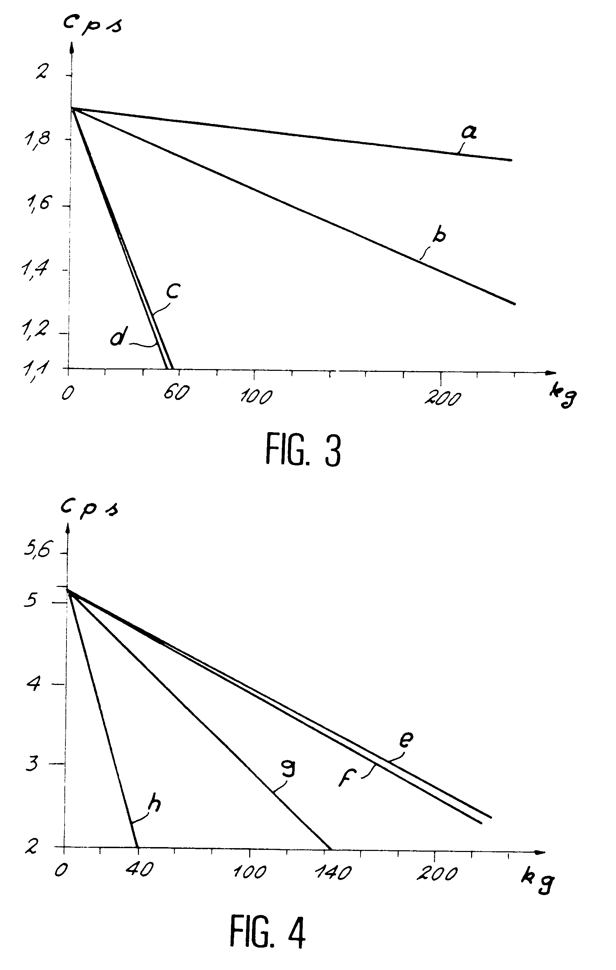

Par étalonnage préliminaire, on relève les courbes de la figure 3 avec le compteur C' (avec écran). En abscisses est portée la masse de la matrice (en kilogrammes) et en ordonnées, le taux de comptage.

Les droites a, b, c et d sont relatives à des matrices homogènes respectivement en fer inox, graphite, vinyle et cellulose.

La figure 4 est relative au compteur C dépourvu d'écran. En abscisses, on a toujours la masse de la matrice (en kilogrammes) et en ordonnées, les taux de comptage obtenus. Les droites e, f, g et h sont relatives à des matrices homogènes respectivement en fer inox, graphite, cellulose et vinyle.

Ainsi, un comptage avec le compteur C′ (avec écran) permet tout de suite de déterminer à quelle catégorie appartient la matrice en cours de contrôle :

- celle des matrices légères (cellulose ou vinyle),
- celle des matrices lourdes (fer, graphite).

Le comptage avec le comteur C (sans écran) permet de distinguer entre vinyle et cellulose.

On peut donc très rapidement, par double comptage à l'aide des compteurs C et C′, déterminer si la matrice est ou non composée de matière hydrogénée et, dans l'affirmative, s'il s'agit de vinyle ou non.

## Revendications

1. Dispositif de détection de matières fissiles comprenant :

- un alvéole de mesure (42) apte à recevoir un fût (40) constitué d'une matrice, laquelle est éventuellement hydrogénée, cette matrice étant susceptible de contenir de la matière fissile,
- sur un côté de cet alvéole, un générateur pulsé de neutrons (10),
- autour de l'alvéole (40), des moyens (21, 22) pour thermaliser les neutrons émis par la source pulsée en neutrons thermiques et un ensemble de détection (23, 24) des neutrons de fission émis par l'éventuelle matière fissile,

ce dispositif étant caractérisé par le fait qu'il comprend en outre, dans l'alvéole (42), et à l'opposé de la source pulsée de neutrons (10), deux compteurs proportionnels (C, C′) sensibles aux neutrons émis par la source pulsée et disposés l'un au-dessus de l'autre symétriquement par rapport au plan médian du fût à contrôler (40), l'un des deux compteurs (C′) étant recouvert d'un écran neutronique, ces deux compteurs ayant été préalablement étalonnés avec diverses matrices homogènes de poids connu et réalisées en divers matériaux dont des matériaux hydrogénés, un comptage à l'aide du compteur avec écran (C′) permettant de savoir si la matrice est en matériau léger ou en matériau lourd et un comptage à l'aide du compteur sans écran (C) permettant de distinguer, dans le cas de matériaux légers, la présence de matière hydrogénée.

2. Dispositif selon la revendication 1, caractérisé par le fait que l'écran disposé devant l'un des deux compteurs (C′) est en cadmium.

## FIG. 1

## FIG. 2

FIG. 3

FIG. 4

Office européen
des brevets

**RAPPORT DE RECHERCHE EUROPEENNE**

Numero de la demande

EP 92 40 1169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 220 099 (C.E.A.) | 1 | G01N23/222 |
| | * revendications 1-3 * | | |
| A,D | & FR-A-2 588 085 | | |
| | ----- | | |
| | | | DOMAINES TECHNIQUES RECHERCHES (Int. Cl.5) |
| | | | G01N |

Le présent rapport a été établi pour toutes les revendications

| Lieu de la recherche | Date d'achèvement de la recherche | Examinateur |
|---|---|---|
| LA HAYE | 17 JUILLET 1992 | VAN DEN BULCKE E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................................................

& : membre de la même famille, document correspondant

EPO FORM 1503 03.82 (P0402)